# EUROPEAN PATENT APPLICATION

(11) **EP 3 637 587 A1**
(43) Date of publication of application: **15.04.2020**
(21) Application number: 18199635.6
(22) Date of filing: 10.10.2018
(51) Int. Cl.: H02K 1/24, H02K 3/28, H02K 3/52, H02K 5/173, H02K 7/08, H02K 7/18, H02K 15/02, F03D 80/70, F03D 9/25, H02K 19/26, H02K 7/102

(54) **GENERATOR FOR A WIND TURBINE INSTALLATION**

(71) Applicant: youWINenergy GmbH, 27568 Bremerhaven (DE)
(72) Inventor: ROHDEN, Rolf, 26607 Aurich (DE)
(74) Representative: Bird & Bird LLP

(57) **Abstract**

The generator is arranged for a wind turbine installation. The generator has a rotor which is arranged to rotate about a rotational axis A and relative to a stator of the generator. The rotor has two or more curved rotor segments and a first of the rotor segments is arranged to be mechanically connected with a second of the rotor segments. Each of the rotor segments has a concave inner segment wall which is arranged to face axis A when the first rotor segment is mechanically connected with the second and third rotor segment. Further, the rotor comprises a circumferential first race which is arranged to face axis A when the first rotor segment is mechanically connected with the second rotor segment. The first race is arranged for first rollers which are rotatably supported by or on the stator and the rotational axes of which can be parallel to axis A when rolling along the first race. The first race is radially closer to axis A than the concave inner segment walls.

## Description

The present invention relates to a generator which is arranged for a wind turbine installation, a wind turbine installation with the generator and a method to assemble the wind turbine installation. The invention can be used advantageously with a new and an existing wind turbine installation.

A wind turbine installation usually comprises a generator the rotor of which can be driven by a wind turbine rotor of the wind turbine installation. A rotor housing of a wind turbine installation known to the applicant comprises segmented support structure parts, two of which can be mechanically connected with each other.

### Problem and Solution

It is an object of the invention to provide an improved generator.

This object is solved by a generator which is arranged for a wind turbine installation (first aspect), a wind turbine installation with the generator (second aspect) and a method to assemble the wind turbine installation (third aspect). Preferred embodiments form the respective subject matter of the dependent claims.

The generator according to the first aspect is arranged for a wind turbine installation. The generator has a rotor which is arranged to rotate about a rotational axis A and relative to a stator of the generator. The rotor has two or more curved rotor segments and a first of the rotor segments is arranged to be mechanically connected with a second of the rotor segments. Each of the rotor segments has a concave inner segment wall which is arranged to face axis A when the first rotor segment is mechanically connected with the second rotor segment. Further, the rotor comprises a circumferential first race which is arranged to face axis A when the first rotor segment is mechanically connected with the second rotor segment. The first race is arranged for first rollers which are rotatably supported by or on the stator and the rotational axes of which can be parallel to axis A when rolling along the first race. The first race is radially closer to axis A than the concave inner segment walls. The first race can be an outer race. The stator can be arranged inside the rotor.

The rotor has rotor segments each of which is smaller and lighter than a single piece rotor. Further, first rollers which are rotatably supported by or on the stator can roll along or on the rotor's first race. This may help to reduce the cost and effort associated with transporting the rotor's parts to the installation site and associated with assembling the wind turbine installation. Further, the number of rejects may be reduced and/or the value of possible rejects can be less. Thereby, the underlying object is achieved.

Within the concept of the present invention, a rotor segment is an essentially shell shaped body which extends along the rotational axis A of a superordinate rotor comprising two or more such rotor segments. The rotor segment also extends along a circumference about axis A. The rotor segment is arranged to be mechanically connected with one or more further similar rotor segments. The rotor segment can be made from cast iron or cast steel.

Within the concept of the present invention, "materially connected" includes that the respective two members are connected by an adhesive, by soldering and by welding. "Materially connected" further includes that the two members are integrally formed as is achieved by casting, moulding and primary forming.

### Preferred embodiments

Preferred embodiments explained in the following can be combined with each other, advantageously, unless stated otherwise.

Preferably, the outer shape of the rotor, when the first rotor segment is mechanically connected with the second rotor segment, can be cylindrical, a frustum of a sphere, a frustum of a cone, a frustum of an ellipse.

Preferably, the generator has a third rotor segment, which is mechanically connectable with the first and second rotor segment. Each of the three segments can be smaller and lighter than the segments of a rotor having only two segments. The rotor can have four or more such rotor segments. This may help to reduce the effort during assembly.

A preferred embodiment comprises a first liner ring which is arranged to be materially and/or mechanically connected with at least one or all of the inner segment walls. The rotor's first race is formed by or on an inner circumferential surface of the first liner ring facing axis A. The first liner ring can be made from cast steel or forged steel. The continuous first race can help to reduce wear.

Another preferred embodiment comprises two or more first liner segments, each arranged to be materially and/or mechanically connected with one or more of the inner segment walls, wherein the first race is formed by the first liner segments' inner circumferential surfaces facing axis A. The first liner segments can be made from cast steel or forged steel. A first end of one of the first liner segments is arranged to abut on an end of another of the first liner segments. The first liner segments are shaped such that a liner ring, particularly the first liner ring, is formed when the first liner segments abut in this manner and when they are connected with the inner segment walls. The first race may be formed by three or more such first liner segments. The generator may have as many first liner segments as rotor segments. The first liner segments may require less cost and effort during manufacturing, transporting to the installation site and/or during the assembly of the generator. It has been observed that sections of a continuous liner ring wear differently during operation of the generator. This embodiment may allow to replace just a worn first liner segment while keeping the other first liner segment(s).

In a preferred embodiment, each of the rotor segments has a first rib, which extends from the inner segment wall in a plane perpendicular to axis A. The first race is formed by or on an inner circumferential surface or each of the first ribs facing axis A. When the first rotor segment is mechanically connected with the second rotor segment, the first races of their first ribs align and extend circumferentially. Particularly on account of their first races, the first ribs may help to reduce the cost and effort associated with machining the rotor's parts. Further, the cost and effort associated with assembling the wind turbine installation on the installation site.

According to another preferred embodiment, the first liner ring or each of the first ribs has an additional race for the first rollers. The rotational axis of one of the first rollers rolling along or on the first race and the rotational axis of another roller or another first roller rolling along or on the additional race form an angle of more than 45° to 135°, preferably 60° or 90°. In combination, the first race, the additional race and first rollers can form a fixed bearing. This may allow to absorb a force imposed on the rotor along axis A.

Each of the rotor segments of a further preferred embodiment has one or more flanges, each arranged for being mechanically connected with another of the rotor segments. The flange extends from a convex outer segment wall of the respective rotor segment. This may simplify connecting two of the rotor segments.

In a further preferred embodiment, each of the rotor segments has at least one fastening element which is arranged on the respective inner segment wall. The fastening element can be materially and/or mechanically connected with one of the inner segment walls, preferably bolted or riveted to one of the inner segment walls. A magnetic element serving to electromagnetically interact with the stator can be held by the fastening element. The magnetic element can be a pole shoe. The fastening element can have two spaced apart rails and the magnetic element can be pushed or slid between these rails. The rails may be shorter than the magnetic element. A first surface of the first rail and a second surface of the second rail, which surfaces are arranged to abut against the magnetic element, can be arranged to form an angle of more the 0° and less than 3°. A first surface of the first rail and a second surface of the second rail, which surfaces are arranged to abut against the magnetic element, can be arranged to form a dovetail joint with the magnetic element. When the magnetic element is slid between the two rails, a locking element can be mechanically connected with the inner segment wall or at least one of the rails near an end of the magnetic element. This may help to reduce the effort during a first assembly of the generator and/or during maintenance.

According to a preferred embodiment, at least one of the rotor segments comprises two or more fastening elements, wherein the at least two fastening elements are spaced along the concave inner segment wall. The longitudinal axis B of one of the magnetic elements held by one of the fastening elements and axis A can be in the same plane or can be parallel. This may improve the generation of electrical power.

Preferably, the fastening elements are connected with the inner segment wall such that the longitudinal axis B of each of the magnetic elements, when held by one of the fastening elements, and a line parallel to the rotor's axis A form an angle γ, which is different from 0°. The absolute value of angle γ can be less than 10°, preferably less than 5°. This may help to improve the output of the generator or to reduce eddy currents.

In another preferred embodiment, wherein each of the curved rotor segments has at least two of the magnetic elements, each held by one of the fastening elements. Each of the rotor segments can have four or more of the magnetic elements, each held by one of the fastening elements. The magnetic elements of the first rotor segment are electrically connected in parallel with the magnetic elements of the second rotor segment. The magnetic elements can include an electromagnetic coil. This may allow to limit or reduce the excitation voltage of the magnetic elements.

In a further preferred embodiment, the magnetic element includes an electromagnetic coil. The electromagnetic coil can be wound about a supporting element. The supporting element can have a dovetail projection, which is arranged for engaging with the two rails of the fastening element. The wiring of the electromagnetic coil can comprise aluminium, preferably in the form of a foil or wire, which may reduce the cost of the magnetic elements and coils.

In a preferred circuit of coils, the coils of the first rotor segment are connected in series, as are the respective coils of the second rotor segment. The serially connected coils of the first rotor segment are electrically connected in parallel with the serially connected coils of the second rotor segment. If all the coils were connected in series, an exciting voltage would need to be higher than the exciting voltage for the preferred circuit of coils. The preferred circuit of coils permits to build the coils with one or more aluminium foils or aluminium wires instead of copper whereby the cost of the rotor can be reduced.

Each of the rotor segments of a preferred embodiment has a third rib, which extends from the inner segment wall in or parallel to a plane perpendicular to axis A, and is arranged to support the first liner ring or one of the first liner segments. The third ribs of the rotor segments can align or form a first collar in the plane perpendicular to axis A, when the first rotor segment is mechanically connected with the second rotor segment. The third rib can be made from cast iron or cast steel. The third ribs or the first collar may permit to reduce or limit the radial thickness of the first liner ring and of the first liner segments.

In a further preferred embodiment, the first liner ring, one or more of the first liner segments, the first rib or the third rib has two spaced apart third races for second rollers, the rotational axes of which can be essentially perpendicular to axis A. Preferably, the stator rotatably supports several of the second rollers at a first axial position along axis A and several of the second rollers at a second axial position, such that some of the second rollers can roll along one of the third races, when the rotor rotates relative to the stator. Some of the second rollers can be connected with the stator to roll along a first of the third races and further second rollers can be connected with the stator to roll along another of the third races. In combination, the third races and second rollers can form a fixed bearing and may be able to absorb a force imposed on the rotor along axis A.

Another preferred embodiment comprises a bracket, which is arranged to rotatably support one of the first or second rollers, and is mechanically connected with the stator. The bracket can have two bearings which rotatably support an axle of the first or second roller. Alternatively, the roller's axle is fixedly held by the bracket and two bearings are arranged between the axle and the first or second roller. Two or more such brackets may be mounted on the stator, preferably at different positions along axis A, preferably at different angular positions with respect to axis A. This may help to reduce the weight of the rotor. Further, maintenance of the bearings can be simplified.

A further preferred embodiment comprises a second liner ring, arranged to be mechanically connected with the inner segment walls. The second liner ring has a second race for some of the first rollers, the rotational axes of which are parallel to axis A. The second liner ring can be spaced apart along axis A from the first liner ring, from the first liner segments, from the first ribs or from the third ribs. This embodiment may help to absorb forces imposed on the rotor during operation.

Another preferred embodiment comprises two or more second liner segments, each arranged to be materially and/or mechanically connected with one or more of the inner segment walls. A second race is formed by the second liner segments' inner circumferential surfaces facing axis A, particularly for several of the first rollers, the rotational axes of which are parallel to axis A. The second liner segments can be made from cast steel or forged steel. A first end of one of the second liner segments is arranged to abut on an end of another of the second liner segments. The second liner segments are shaped such that a second liner ring is formed, when the second liner segments abut in this manner and when they are connected with the inner segment walls. The second race may be formed by two, three or more such second liner segments. The generator may have as many second liner segments as rotor segments. The second liner segments can be spaced apart along axis A from the first liner ring, from the first liner segments, from the first ribs or from the third ribs. The second liner segments may require less cost and effort during manufacturing, transporting to the installation site and/or during the assembly of the generator. It has been observed that sections of a continuous liner ring wear differently during operation of the generator. This embodiment may allow to replace just a worn second liner segment while keeping the other second liner segment(s).

Preferably, the stator rotatably supports several of the first rollers such that they can roll along or on the second race, when the rotor rotates relative to the stator.

Preferably, each of the rotor segments has a second projection extending from the inner segment wall in a plane perpendicular to axis A, and arranged to support the second liner ring or one or more of the second liner segments. The second projection is spaced apart from the first rib along axis A. The second projection can be a second rib extending from the inner segment wall in a plane or parallel to a plane perpendicular to axis A. The second projection can be a second recess extending into the inner segment wall. This may help to absorb forces imposed on the rotor during operation.

According to a preferred embodiment, at least one of the rotor segments comprises a blade root connecting section extending from the convex outer segment wall. The blade root connecting section is arranged to be mechanically connected with a blade root of a rotor blade, which is arranged opposite of the tip of the rotor blade. The blade root connecting section can have an aerofoil cross section and/or the same cross section as the blade root. The blade root connecting section can be materially and/or mechanically connected with the outer segment wall. The blade root connecting section can be hollow and can accept a pitch mechanism arranged to set a pitch angle of the rotor blade connected with the blade root connecting section. Two or more of the rotor segments can comprise the blade root connecting section. This can help to simplify the assembly of the superordinate wind turbine installation. Further, the list or bill of materials of the wind turbine installation can be reduced.

Alternatively, the blade root of a rotor blade is materially and/or mechanically connected with the convex outer segment wall. The rotor blade can extend from the rotor segment or convex outer segment wall. With this alternative, the list or bill of materials of the wind turbine installation can be reduced.

In another preferred embodiment, the rotor has one or more brake disc segments which can be mounted on one or more of the inner segment walls. The brake disc segments are arranged to form a segmented brake disc when they are mounted on the rotor and can be curved. The segmented brake disc can be arranged to engage with a brake calliper of the superordinate wind turbine installation. The segmented brake disc combined from the brake disc segments can have an essentially cylindrical shape. The longitudinal axis of the cylindrical segmented brake disc can align with the rotational axis A of the rotor. The brake disc segments can be mechanically connected with the first or second liner ring, particularly with an axial end face of the first or second liner ring. The segmented brake disc can engage with a brake calliper mechanically connected with the nacelle and/or with a rotor locking device mountable on the nacelle and explained later on.

A wind turbine installation according to the second aspect comprises a generator as explained above and a turbine rotor. The turbine rotor has a hub and blades extending radially from the hub. The hub is mechanically connected with the rotor of the generator. The wind turbine installation can have a nacelle and a tower arranged for rotatably supporting the nacelle. The nacelle can be arranged to support the generator, to accept the generator inside the nacelle and/or to support the turbine rotor. At its read end, the nacelle may have a hatch through which the first rotor segment can be brought into the nacelle. The wind turbine installation can have a crane or hoist arranged inside the nacelle and arranged to lift the first rotor segment through the hatch.

In a preferred wind turbine installation, the rotor of the generator forms the hub of the turbine rotor. Each of the rotor segments can have one of the blade root connecting sections with which one of the rotor blades is materially and/or mechanically connected. Alternatively, each of the rotor blades extends from one of the rotor segments or its convex outer segment wall and can be materially connected or integrally formed with the rotor segment or its outer segment wall.

A preferred wind turbine installation has a brake calliper mechanically connected with the nacelle. The brake calliper can be arranged and positioned to engage with and/or to apply a braking force on the segmented brake disc of the rotor. This may simplify maintenance of the wind turbine installation or can support to adopt an emergency mode, particularly when the wind velocity exceeds a maximum value.

Another preferred wind turbine installation comprises a rotor locking device arranged to lock the segmented brake disc. The rotor locking device can be mounted on the nacelle. The rotor locking device can have a pin to lock the segmented brake disc and thus the rotor. This may simplify maintenance of the wind turbine installation or can support to adopt an emergency mode, particularly when the wind velocity exceeds a maximum value.

A method according to the third aspect serves to assemble the above wind turbine installation and includes the following steps.
- S1: Casting one of the rotor segments, preferably the first rotor segment,
- S2: Forming one of the magnetic elements, preferably the first magnetic element, by winding a coil, preferably about a supporting element having a dovetail projection, and impregnating the coil,
- S3: Mounting one of the fastening elements on the inner segment wall of the rotor segment,
- S4: Mounting the magnetic element on the fastening element, preferably by sliding the magnetic element between the two rails of the fastening element, preferably mounting a locking element on the inner segment wall,
preferably
- S5: Connecting a terminal of a first magnetic element to a terminal of a second magnetic element, after performing steps S2 to S4 twice.

Preferably, the above steps are performed in a work shop. This may help to reduce cost and effort of manufacturing or improve the quality of the rotor segments. By performing steps S2 to S4 twice, two magnetic elements can be formed and mounted to the same rotor segment. By performing steps S1 to S5 several times, the first and second rotor segment can be produced and furnished with two or more magnetic elements.

A preferred embodiment includes transporting the first and second rotor segments individually to a wind turbine installation site (step S6). This may help to reduce the cost of transport and associated effort.

A preferred embodiment includes the following steps, which can be performed at the installation site:
- S7: lifting one of the rotor segments, preferably the first or the second rotor segment, into a nacelle of the wind turbine installation,
- S8: Mounting the first rotor segment inside the nacelle, preferably on a mobile mounting rack arranged inside the nacelle,
- S9: mechanically connecting the second rotor segment with the first rotor segment, such that the first and second rotor segments are arranged on the front side of or inside the nacelle, whereby the rotor is formed,
- S10: mechanically connecting the first liner ring or one of the liner segments with the first rotor segment, preferably before step S9,
- S11: Arranging the rotor relative to the stator, the stator being mounted inside the nacelle preferably spaced apart from or opposite of a hatch of the nacelle, such that at least one of the first rollers being mounted on the stator abuts on the circumferential first race, preferably by moving the mobile mounting rack towards the stator,
- S12: Mounting one of the second rollers on the stator, such that the second roller can abut on one of the third races of the rotor, preferably to axially secure the rotor, preferably before step S11,
preferably,
- S13: Releasing the first rotor segment or the rotor from the mobile mounting rack.
This may help to reduce cost and effort of assembling the generator.

Another preferred method includes the following steps:
- S9a: mechanically connecting the second rotor segment with the first rotor segment on the ground at the installation site, whereby the rotor is formed,
- Sio: mechanically connecting the first liner ring or one of the liner segments with the first rotor segment, preferably before step S9a,
- S11a: Arranging the rotor relative to the stator on the ground, such that at least one of the first rollers being mounted on the stator abuts on the circumferential first race, preferably by moving a mobile mounting rack supporting the rotor towards the stator,
- S7a: lifting the generator into a nacelle of the wind turbine installation,
- S12: Mounting one of the second rollers on the stator, such that the second roller can abut on one of the third races of the rotor, preferably to axially secure the rotor, preferably before step S7a.
With this preferred method, the cost and effort of independently transporting generator parts including the rotor segments and the stator to the installation site can be less.

A preferred method to repair the generator according to one of the preceding claims, includes the following steps, which can be performed at the installation site:
- S20: Bringing the magnetic element, preferably having an electromagnetic coil, to be repaired or replaced because of failure to the bottom part of the rotor (6 o'clock position) by rotating the rotor of the generator,
- S21: Removing the magnetic element from the fastening element, preferably by releasing a locking element from the inner segment wall, preferably by sliding the magnetic element along the fastening element, preferably keeping the removed magnetic element in the nacelle,
- S22: Inserting another magnetic element in the fastening element, preferably by sliding the magnetic element along the fastening element,
- S23: mounting the locking element on the inner segment wall for securing the magnetic element.
This may help to reduce the cost and effort to repair the generator.

### Preferred Designs

According to a preferred design, a first rotor segment is mechanically connected with a second and a third rotor segment. There is a first liner ring, an inner circumferential surface of which forms the first race. The first liner ring is supported by aligning third ribs which extend from the inner segment wall of the respective rotor segment in a plane perpendicular to axis A. The first race is arranged for first rollers which are rotatably supported by or on the stator and the rotational axes of which can be parallel to axis A when rolling along the first race. The third ribs also have two spaced apart third races along which second rollers can roll. In combination, the third races and second rollers form a fixed bearing and can absorb a force imposed on the rotor along axis A. The first and second rollers are rotatably supported by brackets which are mechanically connected with the stator. The first and second rollers are spaced along a circumference of the respective rotor segment.

Two or more fastening elements are mechanically connected with the respective inner segment wall and magnetic elements held by the fastening elements. The fastening elements have two rails which are bolted to the inner segment wall of the respective rotor segment. Each of the magnetic elements is held by the two rails. A first surface of the first rail and a second surface of the second rail, which surfaces are arranged to abut against the magnetic element, can form an angle of more the 0° and less than 3°. The fastening elements and the magnetic elements can form a respective dovetail joint.

Preferably, a second liner ring, along which further first rollers can roll, is spaced apart from the first liner ring along axis A. The second liner ring is supported by second projections extending from the inner segment wall of the respective rotor segment. Further first rollers are mechanically connected with the stator to roll along a second race formed by the second liner ring.

In an alternative design, three curved rotor segments have third ribs which extend from the inner segment wall of the respective rotor segment. The third ribs are mechanically connected with first liner segments. The first liner segments form the circumferential first race facing axis A for first rollers rotatably supported on the stator. The first race is radially closer to axis A than the concave inner segment walls. The first race is radially closer to the inner segment walls than to axis A. The third ribs have two spaced apart third races for second rollers also mounted on the stator, the rotational axes of which are essentially perpendicular to axis A. In combination, the third races and second rollers can form a fixed bearing and may be able to absorb a force imposed on the rotor along axis A. Brackets rotatably support the first and second rollers and are mechanically connected with the stator. The rotor segments have flanges for mechanically connecting with another of the rotor segments. Two or more fastening elements are connected to the respective inner segment wall and magnetic elements are held by the fastening elements.

Preferably, this alternative embodiment comprises three second liner segments each arranged to be mechanically connected with one of the inner segment walls. Second projections extend from the inner segment wall of the respective rotor segment to support the second liner segments. The second projections align when the first rotor segment is connected with the other rotor segments. The second race is formed by the inner circumferential surfaces of the second liner segments facing axis A. The second liner segments are shaped to form a second liner ring, when mechanically connected with the inner segment walls and their projections. The second race and the second liner segments are spaced apart from the first race along axis A. Some of the first rollers are mounted on the stator to roll along the second race and are spaced apart from other first rollers, which roll along the first race, along axis A.

### Exemplary embodiments

Further advantages become apparent to the skilled person from the following exemplary embodiments.

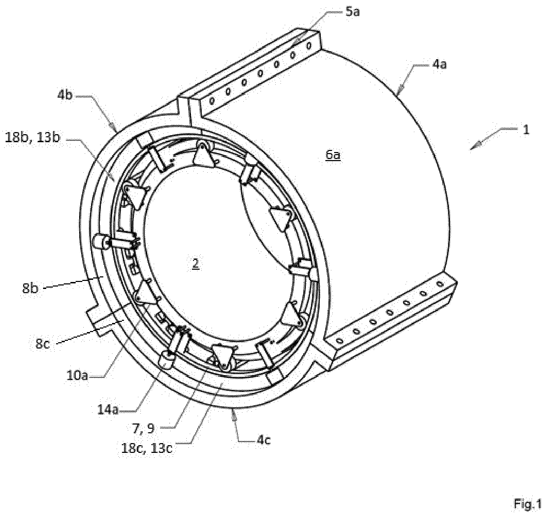

Fig. 1 schematically shows an exemplary rotor 1 having three curved rotor segments 4a, 4b, 4c. The first rotor segment 4a is mechanically connected with the second 4b and third 4c rotor segments. Each of the rotor segments has a concave inner segment wall 8b, 8c arranged to face the rotor's rotational axis A. Further, the rotor comprises a circumferential first race 9 which is arranged to face axis A when the first rotor segment is mechanically connected with the second and third rotor segment. The first race is arranged for first rollers 10 10a, which are rotatably supported by or on the stator 2 and the rotational axes of which can be parallel to axis A when rolling along the first race. The first race is radially closer to axis A than the concave inner segment walls. The first race is radially closer to the inner segment walls than to axis A. The first race can be an outer race.

Further, the rotor comprises a first liner ring 7, an inner circumferential surface of which forms the first race 9. The first liner ring is supported by aligning third ribs 18b, 18c of the rotor segments which extend from the respective inner segment wall 8b, 8c in a plane perpendicular to axis A. The stator 2 is arranged inside the rotor. The stator masks the inner segment walls of the rotor segments, masks fastening elements mechanically connected with the inner segment walls and magnetic elements held by the fastening elements. The first rollers 10a are rotatably supported by brackets which are mechanically connected with the stator. The rotor segments have flanges 5a extending from their convex outer segment walls 6a. Bolts can be fed through holes in the flanges to mechanically connect the rotor segments with each other. The third ribs also have two spaced apart third races 13a along which second rollers 14a can roll. The second of the third races is concealed by the third ribs. In combination, the third races and second rollers form a fixed bearing and can absorb a force imposed on the rotor along axis A The second rollers 14a are rotatably supported by brackets which are mechanically connected with the stator. The first and second rollers are spaced along a circumference of the respective rotor segment.

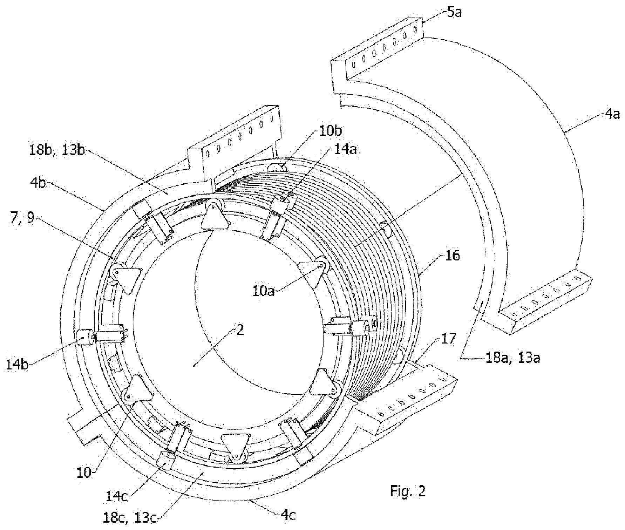

Fig. 2 schematically shows the exemplary rotor of fig. 1 and the above explanations are referred to. The first rotor segment 4a is detached from the second 4b and third 4c rotor segments and is outside its intended position. This situation can occur while assembling the rotor or during its maintenance. Nevertheless, the liner ring 7 is supported by the third ribs 18b, 18c of the rotor segments 4b, 4c. Some of the first rollers 10a abut against the liner ring 7 and against its first race 9. The first rollers 10, 10a, 10b are held and supported by the stator 2 as are the second rollers 14a, 14b, 14c. The second roller 14a is positioned to roll along the third race 13a. The second rollers roll along two spaced apart third races 13a arranged on the third ribs 18a, 18b, 18c of the rotor segments 4a, 4b, 4c. The second of the third races is concealed by the third ribs. A second liner ring 16, along which one or more of the first rollers mechanically connected to the stator can roll, is spaced apart from the first liner ring. The second liner ring 16 is supported by second projections 17b, 17c extending from the inner segment wall of the respective rotor segment.

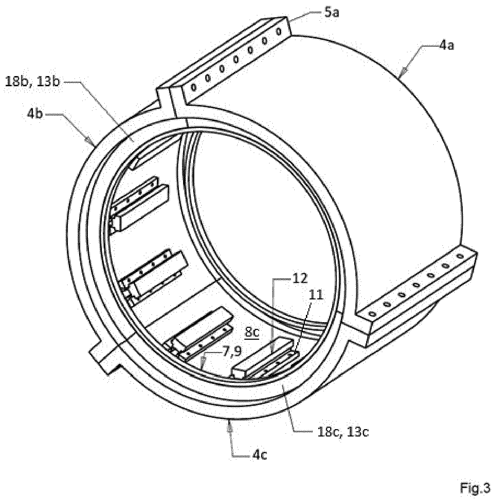

Fig. 3 schematically shows the exemplary rotor of figs. 1 and 2 and the respective explanations also apply. The stator and its first and second rollers are not shown. The fastening elements 11 have two rails which are bolted to the inner segment wall 8c of the third rotor segment 4c. Each of the magnetic elements 12 is held by the two rails. A first surface of the first rail and a second surface of the second rail, which surfaces are arranged to abut against the magnetic element, form an angle of more the 0° and less than 3°. The fastening element and the magnetic element can form a dovetail joint. The third rotor segment 4c has four fastening elements which are spaced along the inner segment wall 8c. The longitudinal axes of the magnetic elements align with the rotor's axis A. The first 4a and second 4b rotor segments are similarly designed. The first liner ring 7 and its first race 9 are well visible. The rotor segments also have the third ribs 18b, 18c which support the first liner ring and have two spaced apart third races 13a for the second rollers. The other of the third races is concealed by the third ribs.

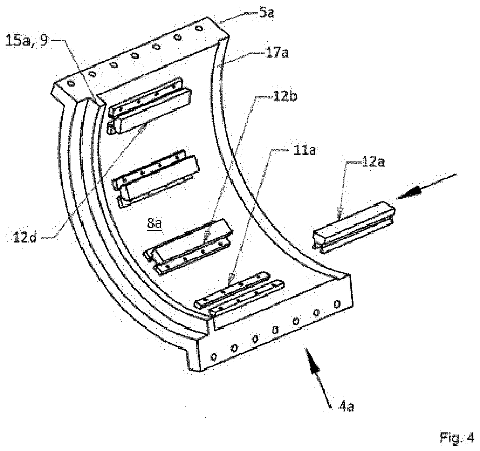

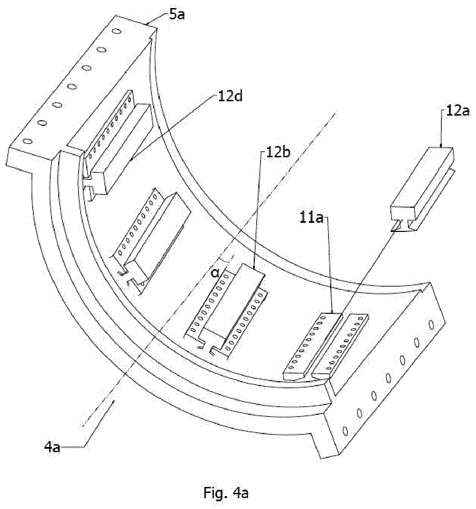

Fig. 4 schematically shows another exemplary curved first rotor segment 4a. A first rib 15a extends from the inner segment wall 8a in a plane perpendicular to axis A. The first rib, particularly its inner curved surface forms a first race 9 for first rollers, the rotational axes of which can be parallel to axis A when rolling along the first race. The third rib also forms two spaced apart third races 13a for second rollers, the second of the third races being concealed by the third rib. The first rotor segment has flanges 5a which extend from the convex outer segment wall of the rotor segment. Bolts can be fed through holes in the flanges to mechanically connect the first rotor segment with the other rotor segments. Four fastening elements 11, each having two rails, are mechanically connected with and are spaced along the inner segment wall 8a. Each of the fastening elements can hold one of the magnetic elements, such that the longitudinal axes of the magnetic elements are parallel to the rotor's axis A. The fastening elements and the magnetic elements form dovetail joints. In the figure, an arrow indicates that one of the magnetic elements 12a can be slid between the two rails of one of the fastening elements 11. The first rotor segment 4a has a second recess 17a arranged for supporting a second liner ring (not shown).

The curved first rotor segment schematically shown in fig. 4a differs by its fastening elements 11a from the exemplary rotor segment of fig. 4. The fastening elements are connected with the inner segment wall such that the longitudinal axis of each of the magnetic elements 12a, 12b, 12d and a (dashed) line parallel to the rotor's axis A form an angle γ, which is different from 0°. The absolute value of angle γ can be less than 10°, preferably less than 5°. This may help to improve the output of the generator or to reduce eddy currents.

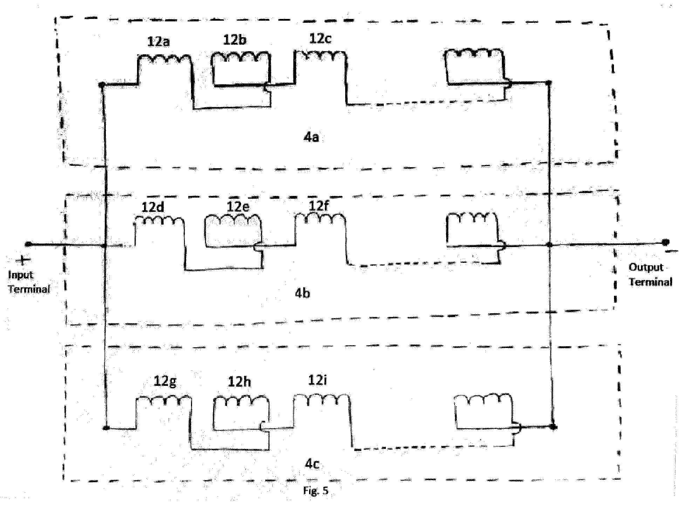

Fig. 5 schematically shows the magnetic elements 12a, 12b, 12c, 12d, 12e, 12f, 12g, 12h, 12i of the three rotor segments 4a, 4b, 4c, each of the rotor segments surrounded by a dashed line. Each of the three rotor segments 4a, 4b, 4c comprises four magnetic elements and each of the magnetic elements has an electromagnetic coil. Fig. 5 also shows a preferred circuit of coils. The four coils 12a, 12b, 12c of the first rotor segment are electrically connected in series, as are the respective coils of the second and third rotor segment. The serially connected coils of the first rotor segment are electrically connected in parallel with the serially connected coils of the second rotor segment and with the serially connected coils of the third rotor segment. If all the coils were connected in series, the exciting voltage would need to be higher than in the preferred circuit of coils. The overall resistance of the preferred circuit of coils is smaller and heating is reduced. The preferred circuit of coils permits to use one or more aluminium foils or aluminium wires instead of copper and ordinary steel stamping in the lamination stack instead of the electrical grade steel stamping which may reduce the overall cost.

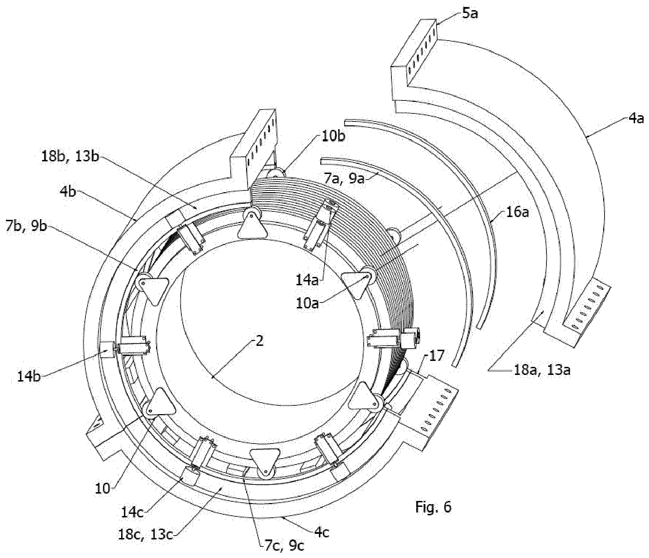

Fig. 6 schematically shows an alternative exemplary embodiment. The rotor 1 has three curved rotor segments 4a, 4b, 4c. The first rotor segment 4a is not yet mechanically connected with the second 4b and third 4c rotor segments. The rotor segments have third ribs 18a, 18b, 18c which extend from the inner segment wall of the respective rotor segment. The third ribs are arranged for supporting first liner segments 19a, 19b, 19c and two of the first liner segments 19b, 19c are mechanically connected with third ribs 18b, 18c. The first liner segment 19a, not yet connected with the third rib 18a, plus the other first liner segments 19b, 19c form the circumferential first race 9 facing axis A for the first rollers 10, 10a rotatably supported on the stator 2. The first race is radially closer to axis A than the concave inner segment walls. The first race is radially closer to the inner segment walls than to axis A.

The third ribs have two spaced apart third races 13a for second rollers 14a, 14b, 14c mounted on the stator 2, the rotational axes of which are essentially perpendicular to axis A. The second of the third races is concealed by the third ribs. In combination, the third races and second rollers can form a fixed bearing and may be able to absorb a force imposed on the rotor along axis A. Brackets rotatably support the first 10 and second rollers 14 and are mechanically connected with the stator. The rotor segments have flanges 5a for mechanically connecting with another of the rotor segments. The fastening elements connected to the respective inner segment wall and the magnetic elements held by the fastening elements are concealed by the stator.

The rotor further comprises three second liner segments 16a, 16b, 16b, each arranged to be mechanically connected with one of the inner segment walls. Second projections 17a, 17c extend from the inner segment wall of the respective rotor segment to support the second liner segments. The second liner segment 16a is not yet connected with the first rotor segment 4a. The second projections align when the first rotor segment is connected with the other rotor segments. The second race 20 is formed by the inner circumferential surfaces of the second liner segments facing axis A. The second liner segments are shaped to form a second liner ring, when mechanically connected with the inner segment walls and their projections. The second race 20 and the second liner segments are spaced apart from the first race 9 along axis A. Some of the first rollers 10b are mounted on the stator to roll along the second race and are spaced apart from other first rollers 10, 10a, which roll along the first race 9, along axis A.

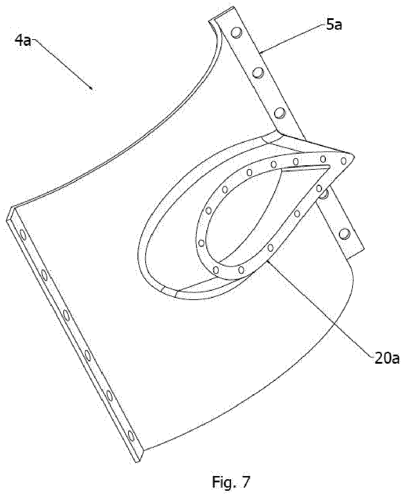

Fig. 7 shows a rotor segment 4a of an exemplary generator. The rotor segment comprises a blade root connecting section 21a extending from the convex outer segment wall 6a. The blade root connecting section is arranged to be mechanically connected with a blade root of a rotor blade, which is arranged opposite of the tip of the rotor blade. The blade root connecting section can have an aerofoil cross section and/or the same cross section as the blade root. The blade root connecting section can be materially and/or mechanically connected with the outer segment wall. The blade root connecting section can be hollow and can accept a pitch mechanism arranged to set a pitch angle of the rotor blade connected with the blade root connecting section. Alternatively, the blade root of a rotor blade is materially and/or mechanically connected with the convex outer segment wall.

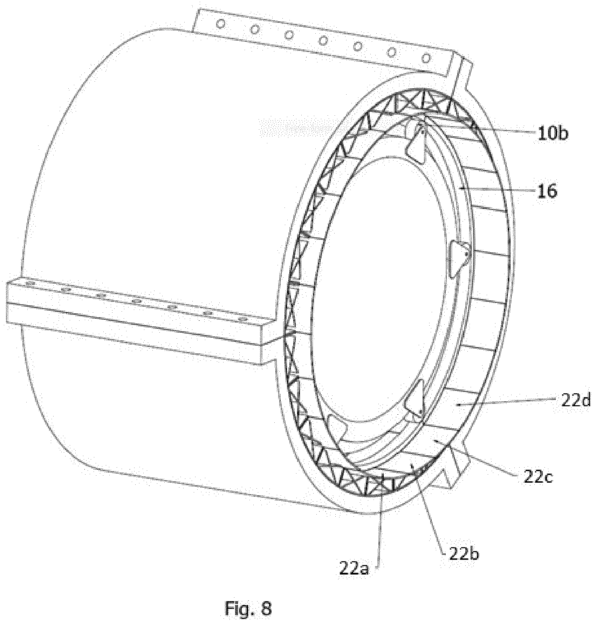

Fig. 8 shows that several brake disc segments 22a-22d are mechanically connected with the respective inner segment wall 4. The brake disc segments can be mechanically connected with the first or second liner ring, particularly with an axial end face of the first or second liner ring. In combination the brake disc segments form a segmented brake disc which is arranged to engage with a calliper mechanically connected with a nacelle of the superordinate wind turbine installation. The segmented brake disc can engage with a rotor locking device which is mountable on the nacelle. This may simplify the maintenance of the wind turbine installation or can support to adopt an emergency mode, particularly when the wind velocity exceeds a maximum value.

### Reference signs

- 1: rotor
- 2: stator
- 4a, 4b, 4c: rotor segments
- 5, 5a: flange of rotor segment
- 6, 6a: convex outer segment wall
- 7: first liner ring
- 8, 8a, 8c: concave inner segment wall
- 9: first race for first rollers
- 10: first rollers, rotational axes can be parallel to axis A
- 11: fastening element for magnetic element
- 12, 12a, 12b, 12c, 12d, 12e, 12f, 12g, 12h, 12i: magnetic element
- 13, 13a, 13b: third race for second rollers
- 14, 14a, 14b: second rollers, rotational axes perpendicular to axis A
- 15, 15a: first rib
- 16: second liner ring
- 17, 17a, 17b: second projection to support second liner ring or second liner segments
- 18, 18a, 18b, 18c: third rib to support first liner ring or first liner segments
- 19, 19a, 19b, 19c: first liner segments
- 20: second race for first rollers
- 21, 21a: blade root connecting section of rotor segment
- 22: brake disc segment
- A: rotational axis of rotor
- B: longitudinal axis of a magnetic element
- γ: angle between axes A and B

## Claims

1. Generator arranged for a wind turbine installation, the generator having a rotor (1) arranged to rotate about a rotational axis A and relative to a stator (2) of the generator, the rotor comprising:
two or more rotor segments, wherein a first (4a) of the rotor segments is arranged to be mechanically connected with a second (4b) of the rotor segments, wherein each of the rotor segments has a concave inner segment wall (8a, 8b) arranged to face axis A when the first rotor segment is mechanically connected with the second rotor segment,
a circumferential first race (9), which is
• arranged to face axis A when the first rotor segment is mechanically connected with the second rotor segment,
• arranged for first rollers (10) which are rotatably supported on the stator, the rotational axes of which can be parallel to axis A when rolling along the first race,
• radially closer to axis A than the concave inner segment walls.

2. Generator according to claim 1, further comprising a first liner ring (7) arranged to be mechanically connected with one or more of the inner segment walls, wherein the first race is formed by an inner circumferential surface of the first liner ring facing axis A.

3. Generator according to claim 1, further comprising two or more first liner segments (19a, 19b, 19c), each arranged to be mechanically connected with one or more of the inner segment walls, wherein the first race is formed by inner circumferential surfaces of the first liner segments facing axis A.

4. Generator according to claim 1, wherein each of the rotor segments has a first rib (15a, 15b, 15c), which extends from the inner segment wall in a plane perpendicular to axis A, wherein the first race is formed by an inner circumferential surface of each of the first ribs facing axis A.

5. Generator according to one of the preceding claims, wherein each of the rotor segments has a flange (5a, 5b, 5c) arranged for being mechanically connected with another of the rotor segments, the flange extending from a convex outer segment wall (6a, 6b, 6c) of the respective rotor segment.

6. Generator according to one of the preceding claims, wherein each of the rotor segments has at least one fastening element (11), which is arranged on the respective inner segment wall, wherein a magnetic element (12) can be held by one of the fastening elements, preferably the magnetic element can be pushed or slid between two spaced apart rails of the fastening element.

7. Generator according to claim 6, wherein one of the rotor segments comprises two or more fastening elements, wherein the fastening elements are spaced along the concave inner segment wall, preferably wherein the longitudinal axis B of one of the magnetic elements held by one of the fastening elements and axis A are in the same plane or are parallel.

8. Generator according to one of claims 6 to 7, wherein the fastening elements are connected with the inner segment wall such that the longitudinal axis B of each of the magnetic elements, when held by one of the fastening elements, and a line parallel to the rotor's axis A form an angle γ, which is different from 0°.

9. Generator according to one of claims 6 to 8, wherein each of the rotor segments has at least two of the magnetic elements each held by one of the fastening elements, wherein the magnetic elements of the first rotor segment are electrically connected in parallel with the magnetic elements of the second rotor segment.

10. Generator according to one of claims 6 to 9, wherein the magnetic element includes an electromagnetic coil, preferably the wiring of which comprises aluminium, preferably in form of a foil or a wire.

11. Generator according to claims 9 and 10, wherein the coils of the first rotor segment are connected in series, the coils of the second rotor segment are connected in series, and the serially connected magnetic elements of the first rotor segment are electrically connected in parallel with the serially connected magnetic elements of the second rotor segment.

12. Generator according to one of the preceding claims, wherein each of the rotor segments has a third rib (18a, 18b), which extends from the inner segment wall in a plane perpendicular to axis A, and is arranged to support the first liner ring (7) or one of the first liner segments (19).

13. Generator according to one of the preceding claims, wherein the first liner ring, one of the first liner segments, the first rib or the third rib has two spaced apart third races (13a, 13b) arranged for second rollers (14) which are rotatably supported on the stator, the rotational axes of which can be perpendicular to axis A.

14. Generator according to claim 13, wherein several of the second rollers are arranged on the stator at a first axial position along axis A and several of the second rollers at a second axial position, such that some of the second rollers can roll along one of the third races, when the rotor rotates relative to the stator.

15. Generator according to one of the preceding claims, comprising one or more brackets, each of which is arranged to rotatably support one of the first or second rollers, and each of which is mechanically connected with the stator.

16. Generator according to one of the preceding claims, further comprising a second liner ring (16), arranged to be mechanically connected with at least one of the inner segment walls spaced apart from the first liner ring or from the first ribs, the second liner ring having a second race (20) for first rollers (10) which are rotatably supported on the stator.

17. Generator according to claim 16, wherein the stator rotatably supports several first rollers such that they can roll along the second race, when the rotor rotates relative to the stator.

18. Generator according to one of claims 16 to 17, wherein each of the rotor segments has a second projection (17a, 17b) extending from the inner segment wall (8a, 8b, 8c) in a plane perpendicular to axis A, and arranged to support the second liner ring (16), wherein the second projection is spaced apart from the first liner ring or from the first rib along axis A.

19. Generator according to one of the preceding claims, wherein at least one of the rotor segments comprises a blade root connecting section (21, 21a) extending from the convex outer segment wall, wherein the blade root connecting section is arranged to be mechanically connected with a blade root of a rotor blade.

20. Generator according to one of the preceding claims, wherein the rotor has one or more brake disc segments (22) which can be mounted on one of the inner segment walls, wherein the brake disc segments are arranged to form segmented brake disc when they are mounted on the rotor.

21. Wind turbine installation comprising a generator according to one of the preceding claims, a turbine rotor having a hub and blades extending radially from the hub, wherein the hub is mechanically connected with the rotor of the generator.

22. Wind turbine installation according to claim 21, comprising a nacelle supporting the generator and/or accepting the generator inside, and a brake calliper mechanically connected with the nacelle and arranged to engage with the segmented brake disc according to claim 20.

23. Method to assemble a wind turbine installation according to claims 21 and 22, including the following steps, preferably performed in a workshop:
S1 Casting one of the rotor segments, preferably the first rotor segment,
S2 Forming one of the magnetic elements, preferably the first magnetic element, by winding a coil, preferably about a supporting element having a dovetail projection, and impregnating the coil,
S3 Mounting one of the fastening elements on the inner segment wall of the rotor segment,
S4 Mounting the magnetic element on the fastening element, preferably by sliding the magnetic element between the two rails of the fastening element, preferably mounting a locking element on the inner segment wall,
preferably
S5 Connecting a terminal of a first magnetic element to a terminal of a second magnetic element, after performing steps S2 to S4 twice.

24. Method according to claim 23, including transporting the first and second rotor segments individually to a wind turbine installation site (step S6).

25. Method according to claim 24, including the following steps, preferably performed at the installation site:
S7 Lifting one of the rotor segments, preferably the first or the second rotor segment, into a nacelle of the wind turbine installation,
S8 Mounting the first rotor segment inside the nacelle, preferably on a mobile mounting rack arranged inside the nacelle,
S9 Mechanically connecting the second rotor segment with the first rotor segment, such that the first and second rotor segments are arranged on the front side of or inside the nacelle, whereby the rotor is formed,
S10 Mechanically connecting the first liner ring or one of the liner segments with the first rotor segment, preferably before step S9,
S11 Arranging the rotor relative to the stator, the stator being mounted inside the nacelle, such that at least one of the first rollers being mounted on the stator abuts on the circumferential first race, preferably by moving the mobile mounting rack towards the stator,
S12 Mounting one of the second rollers on the stator, such that the second roller can abut on one of the third races of the rotor, preferably to axially secure the rotor, preferably before step S11,
preferably,
S13 Releasing the first rotor segment or the rotor from the mobile mounting rack.

26. Method to repair the generator according to one of the preceding claims, including the steps
S20 Bringing the magnetic element, preferably having an electromagnetic coil, to be repaired or replaced because of failure to the bottom part of the rotor (6 o'clock position) by rotating the rotor of the generator,
S21 Removing the magnetic element from the fastening element, preferably by releasing a locking element from the inner segment wall, preferably by sliding the magnetic element along the fastening element, preferably keeping the removed magnetic element in the nacelle,
S22 Inserting another magnetic element in the fastening element, preferably by sliding the magnetic element along the fastening element,
S23 mounting the locking element on the inner segment wall for securing the magnetic element.
